# EUROPEAN PATENT APPLICATION

(11) **EP 3 050 916 A1**
(43) Date of publication of application: **03.08.2016**
(21) Application number: 16152808.8
(22) Date of filing: 26.01.2016
(51) Int. Cl.: C08J 5/18, C08K 3/04

(54) **METHOD OF MANUFACTURING A POLYIMIDE FILM**

(30) Priority: 29.01.2015 US 201514609283
(71) Applicant: Rohr, Inc., Chula Vista, CA 91910-2098 (US)
(72) Inventor: PUJAR, Vijay V., San Diego, CA California 92127 (US); KRUCKENBERG, Teresa, La Mesa, CA California 91910 (US); VICTOR, Jared, San Diego, CA California 92101 (US); LEMANSKI, Joseph R., Chula Vista, CA California 91911 (US)
(74) Representative: Leckey, David Herbert

(57) **Abstract**

A polyimide resin (110; 210) may be extruded into a polyimide film (117; 217). The viscosity of the polyimide resin (110; 210) may be increased by adding nanomaterials (112; 212) to the polyimide resin (110; 210). The polyimide film (117; 217) may be a surface film (317) for a composite laminate (300). The polyimide film (117; 217) may be resin film infused with dry fiber layers. The nanomaterials (112; 212) may decrease microcracking and increase ultraviolet radiation protection.

## Description

### FIELD

The present disclosure relates to composite materials, and more particularly, to methods of manufacturing polyimide composite materials.

### BACKGROUND

Composite materials have various advantageous properties over conventional metal materials. In particular composite materials may be lighter than metals such as aluminum. However, some composite matrix materials do not perform well at high sustained temperatures. For example, epoxy-based thermoset resin composites are typically not suitable for environments with sustained temperatures over 250 °F (120 °C).

Polyimide-based resin composites are known to operate effectively at higher temperatures than epoxy composites. However, known polyimide-based resins in their liquid state typically have very low viscosity, rendering them very difficult to convert into a film to be used in later phases of manufacturing a composite component. This has been a practical impediment to wide spread use of polyimide-based resin systems.

### SUMMARY

A method of manufacturing a polyimide film may comprise adding nanomaterials to a polyimide resin and forming the polyimide resin and the nanomaterials into a film through a first nip roller.

In various embodiments, adding the nanomaterials to the polyimide resin may increase a viscosity of the polyimide resin. The nanomaterials may comprise at least one of carbon nanotubes, carbon nanofibers, and graphene nanoplatelets. The method may comprise co-extruding the polyimide resin and a carbon veil through a second nip roller. The polyimide resin may be extruded into the polyimide film. The polyimide film may be uncured. The polyimide film may be partially cured. The polyimide resin may be heated prior to the extruding.

A method of manufacturing a composite laminate may comprise adding nanomaterials to a polyimide resin, extruding the polyimide resin into a polyimide film, laying together a plurality of composite plies each comprising a carbon fabric and polyimide resin, wherein each composite ply comprises either separate layers or carbon fabric and the polyimide resin film, or each composite ply comprises a prepreg fabric made from a prior infusion of the polyimide resin film into a carbon fiber fabric, and compressing, heating and curing the plies together to form a laminate.

In various embodiments, the polyimide film may be coupled to a surface of the composite laminate. The polyimide film may be interleaved between adjacent dry fiber layers. The dry fiber layers may comprise carbon fiber. The polyimide film and the dry fiber layers may be resin film infused.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1 illustrates a schematic view of a system for filming a polyimide resin in accordance with various embodiments;
FIG. 2 illustrates a schematic view of a system for manufacturing a polyimide film with a carbon veil in accordance with various embodiments;
FIG. 3 illustrates a cross-section view of a composite laminate with a surface film in accordance with various embodiments; and
FIG. 4 illustrates a flowchart of a process for manufacturing a polyimide film in accordance with various embodiments.

### DETAILED DESCRIPTION

The detailed description of various embodiments herein makes reference to the accompanying drawings, which show various embodiments by way of illustration. While these various embodiments are described in sufficient detail to enable those skilled in the art to practice the inventions, it should be understood that other embodiments may be realized and that logical, chemical and mechanical changes may be made without departing from the scope of the inventions. Thus, the detailed description herein is presented for purposes of illustration only and not of limitation. For example, the steps recited in any of the method or process descriptions may be executed in any order and are not necessarily limited to the order presented.

Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

A method for manufacturing a polyimide film may comprise adding nanomaterials to a polyimide resin. The nanomaterials may increase the viscosity of the polyimide resin. The polyimide resin with the nanomaterials may be extruded through a nip roller. The nip roller may produce an uncured or semi-cured polyimide film comprising nanomaterials. In addition to increasing the viscosity of the polyimide resin which is beneficial in producing the film, the nanomaterials may improve microcracking resistance in the polyimide composites, may improve ultraviolet resistance in the polyimide composites, and may increase thermal and electrical conductivity.

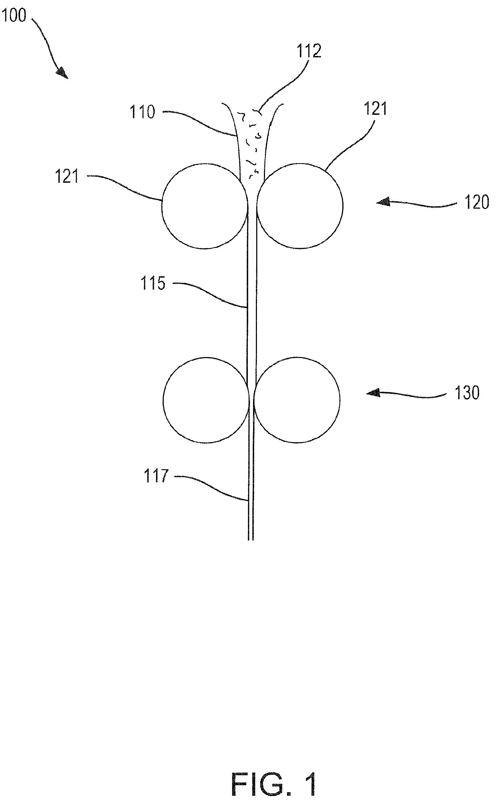

Referring to FIG. 1, a system 100 for filming a polyimide resin is illustrated according to various embodiments. Nanomaterials 112 may be added to a polyimide resin 110. In various embodiments, the nanomaterials 112 may be at least one of carbon nanotubes, carbon nanofibers, or graphene nanoplatelets. The nanomaterials 112 may be introduced to the polyimide resin 110 by a variety of methods. In various embodiments, the nanomaterials 112 may be distributed in a solvent, such as alcohol or acetone. The solvent may be mixed with the polyimide resin 110. The solvent may be removed from the polyimide resin 110 by heating the mixture, leaving the nanomaterials 112 dispersed in the polyimide resin 110. In various embodiments, the nanomaterials 112 may be introduced directly into the polyimide resin 110, and the polyimide resin 110 and nanomaterials 112 may be mixed using a high shear mixing method.

The nanomaterials 112 may increase the viscosity of the polyimide resin 110. Without the nanomaterials 112, the viscosity of the polyimide resin 110 may be too low to create an uncured film using a nip roller. The high surface area to volume ratio of the nanomaterials 112 may provide many interfaces between the nanomaterials 112 and the polyimide resin 110, which results in the higher viscosity of the polyimide resin 110.

The polyimide resin 110 may be extruded through the nip roller 120. The nip roller 120 may comprise two or more rollers 121, which compress and flatten the polyimide resin 110 into a thin sheet 115. In various embodiments, the polyimide resin 110 may be temporarily heated prior to or during extrusion of the polyimide resin 110 through the nip roller 120. Heating the polyimide resin 110 may temporarily decrease the viscosity of the polyimide resin 110, which may allow for easier processing of the polyimide resin 110. In various embodiments, the polyimide resin 110 may be extruded through a series of nip rollers 120, 130. Each nip roller 120, 130 may successively form the polyimide resin 110 into a thinner film. After extrusion through the nip rollers 120, 130, the polyimide resin 110 may be a polyimide film 117 comprising nanomaterials dispersed throughout. In various embodiments, the polyimide film 117 may cool after being extruded, and the viscosity may increase as the polyimide film 117 cools. In various embodiments, the polyimide film 117 may be at least partially cured. The partially cured polyimide film 117 may allow for handling of the polyimide film 117 which may be formed into a desired shape on a substrate.

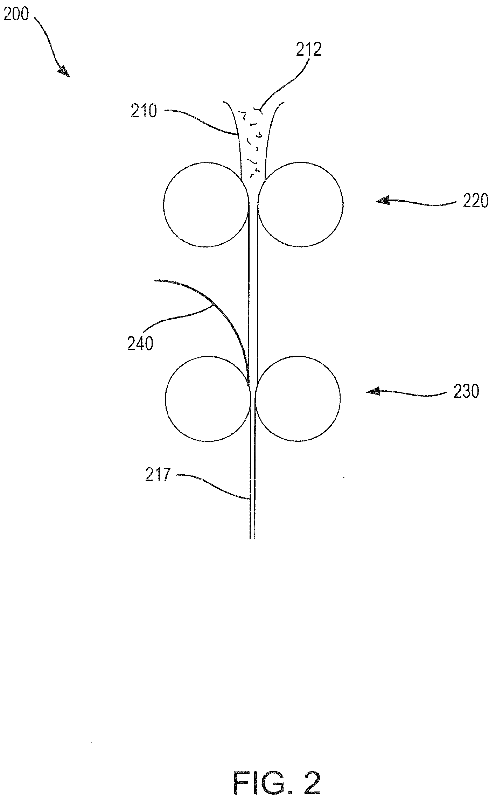

Referring to FIG. 2, a system 200 for manufacturing a polyimide film with a carbon veil is illustrated according to various embodiments. Although described primarily as a carbon veil, those skilled in the art will appreciate that various materials may be suitable for the veil, such as glass fibers or polymer fibers. Nanomaterials 212 may be introduced into a polyimide resin 210, as discussed with reference to FIG. 1, with respect to nanomaterials 112 and polyimide resin 110. The polyimide resin 210 may be extruded through a first nip roller 220. A carbon veil 240 may be introduced to the polyimide resin 210, and the polyimide resin 210 and the carbon veil 240 may be co-extruded through a second nip roller 230. In various embodiments, the carbon veil 240 may be a carbon fiber veil or a carbon nanofiber veil. The co-extrusion through the second nip roller 230 may cause the polyimide resin 210 with the nanomaterials 212 to impregnate the carbon veil 240. The carbon veil 240 may provide a support layer for the polyimide resin 210. The polyimide resin 210 and the carbon veil 240 may be extruded into an uncured or partially cured polyimide film 217.

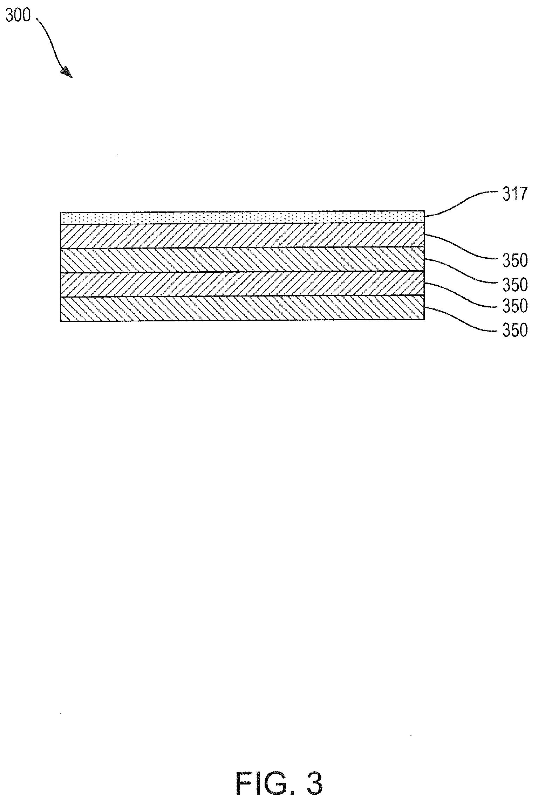

Referring to FIG. 3, a composite laminate 300 is illustrated according to various embodiments. The composite laminate 300 may comprise a plurality of composite plies 350. Each composite ply or ply layer 350 may comprise a resin matrix material reinforced with fibers, such as carbon fibers. Each ply layer 350 is formed either from a separate polyimide resin film and a woven or non-woven carbon fiber fabric, where the resin film is infused into the fabric as part of the cure cycle, or formed from a polyimide and carbon fiber prepreg fabric. The prepreg fabric itself may be formed in a known manner in a separate step where a film of polyimide resin is incorporated into a carbon fiber woven or nonwoven fabric layer, and then stored as a prepreg until incorporated into a layup as shown in FIG. 3. The composite laminate may further comprise a surface layer 317. The surface layer 317 may be formed from incorporating on top of the layup a layer of polyimide film comprising nanomaterials, prepared in the manner explained with reference to FIG. 1 and FIG. 2. In various embodiments, the surface film 317 may comprise a polyimide resin and nanomaterials with or without a carbon veil. After all the layers 350 and 317 are prepared, the whole layup may be vacuum bagged, heated, compressed and consolidated, and cured according to a suitable cure cycle and setup.

The surface layer 317 may improve the performance of a multi-ply composite laminate 300 by protecting against the formation of microcracks at the surface thereof. A resin rich surface, in combination with nanomaterials incorporated therein in the manner previously explained, is believed to provide additional resistance to microcracking, due in part to the ability of the nanomaterials to form a reinforcing high-strength and interlinked matrix within the resin itself. Additionally, the surface layer 317 with the nanomaterials may provide enhanced protection against ultraviolet radiation as the nanomaterials are known to do. The composite laminate 300 may be used in environments at sustained temperatures of 500 °F (260 °C) or higher with decreased degradation as compared with polyimides without nanomaterials.

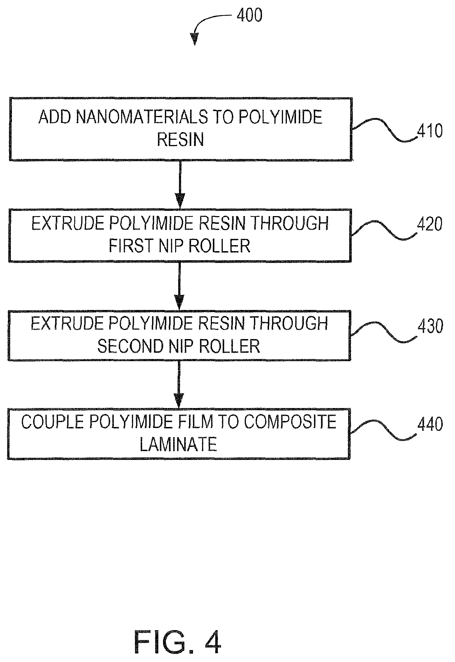

Referring to FIG. 4, a flowchart of a process for manufacturing a polyimide film illustrated according to various embodiments. Nanomaterials may be added to a polyimide resin (step 410). Adding the nanomaterials to the polyimide resin may increase the viscosity of the polyimide resin. In various embodiments, the nanomaterials may be distributed in a solvent, such as alcohol or acetone. The solvent may be mixed with the polyimide resin. The solvent may be removed from the polyimide resin by heating the mixture, leaving the nanomaterials dispersed in the polyimide resin. In various embodiments, the nanomaterials may be introduced directly into the polyimide resin, and the polyimide resin and nanomaterials may be mixed using a high shear mixing method.

The polyimide resin may be extruded through a first nip roller (step 420). In various embodiments, the polyimide resin may be heated prior to or during extrusion through the nip roller to temporarily decrease the viscosity of the polyimide resin. The polyimide resin may be extruded through a second nip roller (step 430). In various embodiments, any number of nip rollers may be used to film the polyimide resin. In various embodiments, the polyimide resin may be co-extruded through the second nip roller with a carbon veil. After extrusion, the polyimide resin may be in the form of a polyimide film comprising nanomaterials.

The polyimide film may be coupled to a composite laminate (step 440). In various embodiments, the polyimide film may be a surface film which is coupled to a composite laminate. The surface film and the composite laminate may be cocured, or the composite laminate may be cured first, and the surface film may be subsequently added to the composite laminate and cured. In various embodiments, the polyimide film may be interleaved between dry fabric layers, and the composite laminate may be manufactured via a polyimide resin film infusion process.

In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Benefits, other advantages, and solutions to problems have been described herein with regard to specific embodiments. Furthermore, the connecting lines shown in the various figures contained herein are intended to represent various functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the inventions. The scope of the inventions is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

## Claims

1. A method of manufacturing a polyimide film (117; 217) comprising:
adding nanomaterials (112; 212) to a polyimide resin (110; 210); and
forming the polyimide resin (110; 210) and the nanomaterials (112; 212) into a film (117; 217) through a first nip roller (120; 220).

2. The method of claim 1, further comprising dispersing the nanomaterials (112; 212) into the polyimide resin (110; 210), wherein the dispersing increases the viscosity of the polyimide resin (110; 210).

3. The method of claim 1 or 2, wherein the nanomaterials (112; 212) comprise at least one of carbon nanotubes, carbon nanofibers, and graphene nanoplatelets.

4. The method of claim 1, 2 or 3, further comprising coupling a support veil (240) with the film (117; 217).

5. The method of claim 4, wherein the support veil (240) comprises at least one of carbon fibers, glass fibers, and polymer fibers.

6. The method of any preceding claim, wherein the polyimide resin (110; 210) and the film (117; 217) are uncured.

7. The method of any of claims 1 to 5, wherein the polyimide resin (110; 210) or the film (117; 217) is partially cured.

8. The method of any preceding claim, further comprising heating the polyimide resin (110; 210) with the nanomaterials (112; 212) prior to the forming.

9. A method of manufacturing a composite laminate (300) comprising:
adding nanomaterials (112; 212) to a polyimide resin (110; 210);
extruding the polyimide resin (110; 210) into a polyimide film (117; 217);
laying together a plurality of composite plies (350) each comprising a carbon fabric and polyimide resin, wherein each composite ply comprises either separate layers or carbon fabric and the polyimide resin film, or each composite ply (350) comprises a prepreg fabric made from a prior infusion of the polyimide resin film (117; 217) into a carbon fiber fabric; and
compressing, heating and curing the plies (350) together to form a laminate (300).

10. The method of claim 9, further comprising coupling the polyimide film (117; 217) to a surface (317) of the composite laminate (300).

11. The method of claim 9 or 10, further comprising interleaving the polyimide film (117; 217) between adjacent dry fiber layers.

12. The method of claim 11, wherein the dry fiber layers comprise at least one of carbon fibers, glass fibers, or carbon nanofibers.

13. The method of claim 11 or 12, further comprising infusing the polyimide film (117; 217) into the dry fiber layers.
